# EUROPÄISCHE PATENTSCHRIFT

(11) **EP 4 185 640 B1**
(45) Veröffentlichungstag und Bekanntmachung des Hinweises auf die Patenterteilung: **17.07.2024**
(21) Anmeldenummer: 20745151.9
(22) Anmeldetag: 21.07.2020
(51) Int. Cl.: C08L 53/02, C08L 91/06, C09K 5/06, C08J 3/12, C08J 5/18

(54) **RIESELFÄHIGES GEMISCH, DESSEN VERWENDUNG UND VERFAHREN ZU DESSEN HERSTELLUNG**
FREE-FLOWING MIXTURE, USE THEREOF AND PROCESS FOR PRODUCTION THEREOF
MÉLANGE À ÉCOULEMENT LIBRE, UTILISATION ASSOCIÉE ET PROCÉDÉ DE PRODUCTION ASSOCIÉ

(43) Veröffentlichungstag der Anmeldung: 31.05.2023
(73) Patentinhaber: SMART ADVANCED SYSTEMS GMBH, 07407 Rudolstadt (DE)
(72) Erfinder: BAUER, Ralf-Uwe, 07407 Rudolstadt (DE)
(74) Vertreter: Carlsohn, Marc René
(86) Internationale Anmeldenummer: PCT/EP2020/070603
(87) Internationale Veröffentlichungsnummer: WO 2022/017592

(56) Entgegenhaltungen:
- DE-A1- 102010 007 497
- DE-A1- 102015 107 860
- DE-A1- 102017 113 884

## Beschreibung

Die Erfindung betrifft ein rieselfähiges Gemisch gemäß dem Oberbegriff des Hauptanspruchs, sowie Verwendungen des Gemischs und ein Verfahren zur Herstellung des Gemischs.

Gemische mit sogenannten Phasenwechselmaterialien (engl. phase change material; PCM) finden zunehmend Beachtung beispielsweise in der Baustoffindustrie, in medizinischtherapeutischen Anwendungen, der Bekleidungsindustrie und der nachhaltigen Nutzung und Speicherung von Energie.

Phasenwechselmaterialien sind Materialien, die bei einem Übergang ihrer Aggregatzustände, insbesondere zwischen dem festen und dem flüssigen Zustand, große Mengen an Energie über einen längeren Zeitraum aufnehmen beziehungsweise abgeben. Aufgrund dieser Eigenschaft können diese Phasenwechselmaterialien als Latentwärmespeicher dienen. Weit bekannt sind beispielsweise mit Phasenwechselmaterial gefüllte Kunststoffkissen, die durch Wärmezufuhr in den flüssigen Zustand überführt werden und auch nach einer Abkühlung im flüssigen Zustand verbleiben. Erst mit dem Setzen eines Nukleationsimpulses, beispielsweise in Form einer Stoßwelle mittels eines kleinen Metallplättchens, wird die Kristallisation des PCM initiiert. Während des vergleichsweise langsam voranschreitenden Übergangs in die feste Phase setzt das Kissen Kristallisationswärme frei, die zum Beispiel zum gezielten Erwärmen von Körperteilen über einen längeren Zeitraum genutzt werden kann.

Um unter anderem ein ungewolltes Auslaufen der Phasenwechselmaterialien, beispielsweise aus einem oben beschriebenen Kunststoffkissen, zu vermeiden, werden diese oft in Polymere eingebettet. Um den unerwünschten Effekt des sogenannten "Ausschwitzens", das heißt dem Austreten von PCM aus der Polymermatrix bei thermischer und/oder mechanischer Belastung der Zubereitung entgegen zu wirken, wird oftmals der Anteil des PCM an der Zubereitung beispielsweise weniger als 70% bezogen auf das Gesamtgewicht der Zubereitung abgesenkt.

Nachfolgend seien lediglich beispielsweise drei Dokumente des Standes der Technik genannt.

In dem Dokument WO 2009/118344 A1 wird ein Verfahren zur Herstellung einer Zusammensetzung enthaltend ein Phasenwechselmaterial beschrieben. In einem Doppelschneckenextruder werden Paraffine mit einem Styrol- Blockpolymer und Polymethylmethacrylat (PMMA) oder einem linearen Polyethylen niederer Dichte (LLDPE) gemischt. Zusätzlich werden als Additiv Carbon-Nanotubes in die Polymermischung eingemischt. Nachteilig ist die Notwendigkeit, zusätzlich zu den Blockpolymeren weitere Polymerkomponenten zum Einsatz bringen zu müssen.

Aus der US 2006/0124892 A1 ist die Kombination von PCM mit unterschiedlichen Arten von Copolymeren wie VLDPE, EPR, SEBS oder SBS bekannt. Der Anteil des PCM kann zwischen 20 und 80% liegen, beträgt aber vorzugsweise zwischen 50 und 70% des Gewichts der PCM-Komposition. Weiterhin können beispielsweise Bindemittel zugegeben werden, die in die Polymermatrix eingebunden werden.

Die Herstellung wärmespeichernder Formkörper ist in der DE 10 2010 007 497 A1 beschrieben. Dabei wird eine polymere Trägerkomponente (60 bis 25 Gewichtsprozent) mit PCM (40 bis 75 Gewichtsprozent) sowie mit dem optionalen Zusatz von Additiven bei 130°C bis 22°C extrudiert und abgeschreckt.

Aus der DE 10 2015 107 860 A1 sind PCM-Polymer-Granulate mit PCM und verschiedenen styrolhaltigen (SEBS, SEEPS) und styrolfreien Blockcopolymeren (Polyolefin-Coppolymere) bekannt, die plastifiziert und beispielsweise auf textile Träger aufgebracht werden können.

Aus der DE 10 2017 113 884 A1 sind schließlich Kombinationen von PCM mit SEEPS und und amorphen Polymeren wie PMMA bekannt, die mit elektrisch leitfähigen Materialien zu elektrisch leitfähigen Zusammensetzungen kombiniert werden.

Ein im Stand der Technik nicht zufriedenstellend gelöstes Problem besteht in der Bereitstellung einer auslaufsicheren Zubereitung enthaltend mindestens einen polymeren Träger sowie einen hohen Anteil an PCM.

Der Erfindung liegt daher die Aufgabe zu Grunde, eine gegenüber dem Stand der Technik verbesserte PCM-Zubereitung sowie ein Verfahren zu deren Herstellung vorzuschlagen.

Die Aufgabe wird durch die Gegenstände der unabhängigen Ansprüche gelöst. Vorteilhafte Weiterbildungen und Verwendungen sind Gegenstand der abhängigen Ansprüche.

Die Aufgabe wird mit einem rieselfähigen Gemisch gelöst, das ein Granulat aus einem thermoplastischen Elastomer und einem funktionalisierten thermoplastischen Elastomer und mit mindestens einem an die thermoplastischen Elastomere gebundenen Phasenwechselmaterial (PCM) aufweist. Das Gemisch enthält außerdem wenigstens ein zur Adsorption und/oder Absorption von Anteilen des Phasenwechselmaterials fähiges Bindemittel. Das thermoplastische Elastomer und das funktionalisierte thermoplastische Elastomer werden nachfolgend auch als TPE beziehungsweise als funktionalisiertes TPE bezeichnet.

Gekennzeichnet ist ein erfindungsgemäßes Gemisch dadurch, dass das Bindemittel im Wesentlichen zwischen den Granulaten vorliegt. Das Bindemittel ist also nicht in die als polymere Träger fungierenden thermoplastische Elastomere eingearbeitet und in diese eingeschlossen, sondern liegt in den Zwischenräumen zwischen den Körnern des Granulats vor. Neben frei in den Zwischenräumen vorhandenem Bindemittel kann auch ein Anteil des Bindemittels aufgrund auftretender Adhäsionskräfte an der Oberfläche der Granulatkörner haften. Das Bindemittel ist jedoch weder kovalent an die Granulatkörner gebunden noch in diese eingearbeitet.

In einem erfindungsgemäßen Gemisch beträgt der Gewichtsanteil des Phasenwechselmaterials an dem Granulat entweder (erste Alternative) i) zwischen 60% und 90%, wenn das Bindemittel ein nicht-silikatisches Bindemittel ist oder (zweite Alternative) ii) der Gewichtsanteil des Phasenwechselmaterials an dem Granulat beträgt mehr als 70%, insbesondere mehr als 80% und bis zu 90%.

Kern der Erfindung ist die Erkenntnis, dass gleichzeitig sowohl ein hoher Anteil eines PCM, eine Auslaufsicherheit des Gemisches als auch der Erhalt der Rieselfähigkeit des Gemisches erreicht werden kann, wenn das Bindemittel im Wesentlichen in den Zwischenräumen des Granulats vorliegt und dort eventuell aus dem polymeren Träger ausgetretenes ("ausgeschwitztes") PCM gebunden wird. Dabei wird die Kapazität des PCM zur Wärmespeicherung nicht oder nicht wesentlich beeinflusst.

Ein funktionalisiertes thermoplastisches Elastomer weist zusätzliche funktionelle Gruppen auf, durch deren Wirkung die Eigenschaften des funktionalisierten TPE gezielt eingestellt werden können. In einer Ausführungsform des erfindungsgemäßen Gemischs kann das funktionalisierte thermoplastische Elastomer ein mit zusätzlichen Hydroxy-Gruppen (-OH) versehenes thermoplastisches Elastomer sein. Eine solche Funktionalisierung erhöht vorteilhaft die Basisbindekapazität des polymeren Trägers gegenüber dem PCM.

Das thermoplastische Elastomer kann ein Styrol-Blockpolymer und das funktionalisierte thermoplastische Elastomer ein funktionalisiertes Styrol-Blockpolymer sein.

Als Phasenwechselmaterialien können aus dem Stand der Technik bekannte Substanzen verwendet sein. Beispielsweise können aliphatische Kohlenwasserstoffverbindungen, wie gesättigte oder ungesättigte C10-C40-Kohlenwasserstoffe, verzweigt oder linear vorliegend, verwendet werden. Ebenso können cyclische Kohlenwasserstoffe oder aromatische Kohlenwasserstoffe sowie Fettalkohole oder C6-C30-Fettamine verwendet sein. Möglich ist auch die Verwendung der C1-C10-Alkylester von Fettsäuren. Natürliche oder synthetisch hergestellte Wachse oder halogenierte Kohlenwasserstoffe sind ebenfalls denkbare Phasenwechselmaterialien. Die Schmelztemperatur der PCM sollte zwischen -5° und 100°C betragen und vorzugsweise in einem Bereich von 5°C bis 85°C liegen.

Im Sinn der vorliegenden Beschreibung sind Bindemittel Stoffe, die eine gezielte Aufnahme von hydrophoben Phasenwechselmaterialien durch Sorption oder Kapillarität ermöglichen. Unter Sorption versteht man die selektive Aufnahmefähigkeit definierter Substanzklassen im konkreten Fall für Phasenwechselmaterialien.

Das mindestens eine Bindemittel kann absorbierend oder adsorbierend für die in der Netzwerkstruktur des polymergebunden PCM-Granulates nicht in jedem Fall fest verankerten Anteile des Phasenwechselmaterials wirken. Dabei liegt das Bindemittel vorteilhaft in einem feinkörnigen, pulverförmigen und/oder faserförmigen, insbesondere kurzfaserigen, Zustand vor, um eine hohe spezifische Oberfläche und damit Bindungskapazität gegenüber dem PCM zu erreichen und zugleich die Rieselfähigkeit zu erhalten.

Die Bestimmung der Rieselfähigkeit kann beispielsweise mit Messtrichtern oder speziellen Rieselfähigkeitsprüfgeräten erfolgen und entsprechend der DIN EN ISO 6186 vorgenommen werden. Dabei wird für eine vorgegebene Masse oder ein vorgegebenes Volumen an zu prüfendem Granulat die erforderlich Rieselzeit gemessen.

Die Menge des Bindemittels kann bis zu 100% bezogen auf die polymergebundene Menge PCM betragen. Die mindestens erforderliche Menge an Bindemittel kann bestimmt werden, indem nach durchgeführtem Phasenwechseltest das Bindemittel dahingehend überprüft wird, ob dieses in pastöser oder verklebter Form vorliegt. Als Prüfungsnorm für die Zyklenstabilität kann beispielsweise die Norm RAL-GZ 896 des Deutschen Instituts für Gütesicherung und Kennzeichnung e.V. (Gütesicherung Quality Assurance RAL-GZ 896; Stand März 2018) dienen.

Als Prüfverfahren für die Aufnahmefähigkeit von Phasenwechselmaterialien in einem bestimmten Bindemittel kann das sogenannte Westinghouse-Verfahren angewendet werden. Bei dieser Methode ist eine Aufheizung des Probenraumes über die

Phasenwechseltemperatur der Prüfsubstanz hinaus erforderlich. Für die Messungen der Aufnahmekapazität an Phasenwechselmaterialien werden konische Siebe definierter Maschenweite nach Vorreinigung mit z. B. 2-Propanol in das zu untersuchendende Phasenwechselmaterial eingetaucht und nach mindestens 10 Minuten Abtropfzeit mit einer Waage mit einer Genauigkeit von 0,1 g (benetztes Sieb) gewogen. Danach wird das Sieb in das Phasenwechselmaterial eingetaucht und 20 g des zu prüfenden Bindemittels auf die Flüssigkeitsoberfläche aufgetragen. Das Sieb wird in das Phasenwechselmaterial eingetaucht und 20 Minuten in der Flüssigkeit belassen. Danach wird das Sieb vorsichtig herausgehoben und kann mindestens 30 Minuten abtropfen. Anschließend wird das Sieb mit dem mit Phasenwechselmaterial getränkten Bindemittel mit einer Waage ausgewogen. Die Masse an gebundenem Phasenwechselmaterial errechnet sich dann aus dem Messwert der Waage abzüglich der Masse des Bindemittels (20 g) und abzüglich der Masse des benetzten Siebes. Werden die Massen des aufgenommenen PCM mit der Masse des eingesetzten Bindemittels in Beziehung gesetzt und mit einhundert multipliziert ((Masse PCM / Masse Bindemittel) x100), so erhält man die Aufnahmefähigkeit in Gewichtsprozent. Diese Messmethode gibt die maximale Aufnahmemenge der Bindemittel für die jeweiligen Phasenwechselmaterialien an.

In einem erfindungsgemäßen Gemisch kann das Bindemittel entsprechend der ersten Alternative ein nicht-silikatisches Bindemittel sein, das beispielsweise ausgewählt ist aus polymeren Pulvern und/oder polymeren Fasern, die insbesondere aus Polyurethan, Polyacrylaten, quervernetzten Polyalken-Terpolymeren, Polypropylen, thermoplastischen Elastomeren und Gummi sowie deren Mischungen bestehen.

Als besonders geeignet als nicht-silikatische Bindemittel haben sich Pulver und/oder Kurzfasern von Polysacchariden sowie deren Derivate und Lignocellulose erwiesen. Die verwendeten Polysaccharide können zum Beispiel aus natürlicher Cellulose, Regeneratcellulose oder auch aus Baumwolle gewonnen werden. Lignocellulosepulver beziehungsweise -fasern können beispielsweise aus Tannen-, Buchen-, Zirbelkiefer- oder Fichtenholz hergestellt werden. Auch die Verwendung von Reststoffen der Lebensmittelherstellung, wie zum Beispiel gemahlene Maisspindeln, ist möglich. Ebenso sind gemahlene Kerne, beispielsweise Olivenkerne, geeignet. Gut geeignet sind auch aus Pflanzenrinde, Borke oder Kork gewonnene Pulver. Verschiedene Kräuter oder Gräser können ebenfalls in Faser- oder Pulverform zur Anwendung kommen. Insbesondere für Anwendungen im Heimtextilbereich kann hier die Freisetzung von ätherischen Inhaltstoffen aus den Bindemitteln vorteilhaft sein. In einer weiteren Ausführungsform stellen Algenpulver mögliche Bindemittel dar. Als Bindemittel können also gemahlene Pflanzenteile genutzt werden. Außerdem ist es möglich, nicht-silikatische hydrophobe biogene Sedimente als Bindemittel entsprechend der ersten Alternative i) zu verwenden. Von Vorteil dabei ist auch die Nutzung natürlicher Materialien ("upcycling").

Entsprechend der zweiten Alternative ii) kann ein silikatisches Bindemittel aus einer Gruppe umfassend Silikate, insbesondere Calciumsilikat, Magnesiumsilikat, Magnesiumaluminiumsilikat oder deren Hydratformen; sowie Schichtsilikate (Phyllosilikate), insbesondere Palygorskit, und Vermiculit ausgewählt sein. Außerdem können als silikatische Bindemittel hydrophobe silikatische biogene Sedimente, insbesondere Kieselgur (z. B. Diatomeenerde) sowie Mischungen enthaltend Kieselgur und Acrylsäuresalz verwendet sein.

In weiteren Ausführungsbeispielen können die Eigenschaften der Bindemittel gezielt beeinflusst sein, indem diese funktionalisiert sind. Bindemittel in einem erfindungsgemäßen Gemisch können beispielsweise mit wenigstens einer der Gruppen Alkyl-, Vinyl-, Epoxy-, Amino-, Methacryl-, Mercapto- und Tetrasulfonsilanen funktionalisiert sein.

Die Rieselfähigkeit des erfindungsgemäßen Gemischs eröffnet eine Vielzahl an Verwendungsmöglichkeiten. Soll das Gemisch zum Beispiel in flexiblen und weichen Produkten eingesetzt werden oder sollen auch kleine Hohlräume ausgefüllt werden, ist es vorteilhaft, wenn das Granulat Korngrößen von 0,5 mm bis 3 mm, vorzugsweise 0,6 mm bis 1,5 mm, aufweist. Die Körnung beziehungsweise die Faserlänge des Bindemittels ist vorzugsweise so auf die Korngröße des Granulats abgestimmt, dass dieses in den Zwischenräumen des geschütteten Granulats aufgenommen ist.

Der durchschnittliche Durchmesser der Körner kann beispielsweise durch die Verwendung von Sieben in geeigneter Abstufung ermittelt werden.

Das erfindungsgemäße Gemisch kann aufgrund seiner Rieselfähigkeit in Form einer Schüttung verwendet werden. Beispielsweise ist das Gemisch für Bauanwendungen direkt als Schüttung zum Aufbau von Wärmespeichern verwendbar. Je nach Verwendung funktionalisierter Bindemittel ist die Kombination mit einer Vielzahl von am Markt verfügbaren Baustoffen möglich.

Eine weitere Verwendung besteht in einem Behältnis mit einer oder mehreren Kammern enthaltend ein erfindungsgemäßes Gemisch. Dieses kann in Hohlkammern des Behältnisses eingebracht sein. Beispielhaft sei hier die Verwendung des Gemischs zur Ernteverfrühung von Pflanzen als Schüttung oder Füllung in doppelwandigen Pflanztöpfen genannt. Aber auch für die Anwendung des schüttfähigen Gemischs als Wärme- bzw. Kältestabilisator im Bereich der Gastronomie, beim Catering oder bei Haushaltsanwendungen in Form von mit dem Gemisch gefüllten Behältnissen mit einer oder mehreren Kammern ist das erfindungsgemäße Gemisch geeignet. Entsprechende Behältnisse mit einer oder mehreren Kammern können beispielsweise aus Polymeren, Glas, Keramik und/oder Metall bestehen.

In weiteren Verwendungen kann ein erfindungsgemäßes Gemisch in Folien, Vliesstoffe, Leder, Textilien (beispielsweise Gewebe, Gewirke oder Gestricke) oder andere geeignete Flächengebilde eingebracht werden. Im Fall von Folien, Vliesstoffen oder Textilien können die Gemische zwischen zwei oder mehrere Lagen der eingesetzten Materialien gebracht werden. Diese Lagen können dann entsprechend des geforderten Anwendungsfalls miteinander verbunden werden. Die Verbindung kann zum Beispiel durch Verschweißen, Verkleben, Vernähen oder andere geeignete Fügeverfahren hergestellt werden.

Eine Vielzahl von Anwendungen erfordert die Ausbildung von Kammerprofilen durch zum Beispiel Verschweißen oder Verkleben der Materialien. Eine Unterteilung in Kammern sichert eine gewünschte Verteilung des Gemischs innerhalb der Materialien beziehungsweise innerhalb des daraus hergestellten Produkts. Außerdem kann durch die Form, die Größe und den Füllgrad der einzelnen Kammern die Flexibilität und/oder die Menge an aufzunehmender und abzugebender Wärmeenergie entsprechend der gewünschten Anwendungen konfektioniert werden. Beispielsweise bieten in Kammern eingeteilte geometrische Strukturen geeignete Gestaltungsmöglichkeiten. Materialien, wie zum Beispiel Folien, Vliesstoffe, Leder, geschäumte Produkte oder andere Materialien sowie Kombinationen daraus, die in ihren ausgestalteten Kammern das Gemisch enthalten, können als kühlende oder wärmende Einlagen für den Heimtextilbereich und in Bekleidung zur Anwendung kommen. So sind zum Beispiel kühlende Kissen ein möglicher Anwendungsfall.

Für die Herstellung flexibler Strukturen zur körpernahen Anwendung werden bei der Erstellung von Kammerprofilen vorteilhaft weiche, elastische Folien, Vliesstoffe oder Textilien genutzt. Besonders geeignete Folien sind zum Beispiel Folien aus Polyurethan. Eine Ausführungsform besteht in der Ausbildung von einer Mischung aus Luft und dem Gemisch, so dass dadurch der Wärmeübergang und die Flexibilität des Verbundes zusätzlich beeinflusst und eingestellt werden kann.

Das erfindungsgemäße Gemisch kann aber auch zusätzlich nach der Einbringung in Folien mittels Vakuumanwendung oder Verwendung von Schrumpffolien nahezu luftfrei in einen Folienverbund eingebracht werden.

Es ist weiterhin möglich, ein Flüssigsilikon enthaltendes erfindungsgemäßes Gemisch herzustellen. Das Gemisch beinhaltet dann vorteilhaft ein funktionalisiertes Bindemittel, sodass es direkt in Flüssigsilikone eingebunden werden kann. Dazu werden die Flüssigsilikone durch Zumischung der Härterkomponente hergestellt und anschließend mit dem Gemisch im gewünschten Verhältnis vermengt. Es können Anteile des erfindungsgemäßen Gemisches im Flüssigsilikon von bis zu 80% Volumenanteile des Gesamtanteils realisiert werden. So hergestellte Silikonverbunde sind im weiten Temperaturbereich als flexible Folien anwendbar.

In einer weiteren Verwendungsform kann das erfindungsgemäße Gemisch in Kombination mit Polyacrylaten oder Polyurethanen verwendet werden. Eine mögliche Ausführungsform erhält man, indem wässrige Dispersionen von Polyurethanen oder Polyacrylaten durch Zugabe von Verdickungsmitteln in ihrer Viskosität angepasst und mit dem Gemisch vermengt werden. Die so erhaltene Mischung aus Polyacrylat beziehungsweise Polyurethan und dem Gemisch kann direkt zu Folien oder dreidimensionalen Formkörpern verarbeitet werden. Eine andere Ausführungsform basiert auf der Grundlage der Bildung von Polyurethangelen und der Integration des Gemisches in die gebildeten Gele.

Es gelingt auch, die PCM-Gemische in Cellulosefolien einzubinden. Dazu werden beispielsweise wässrige Lösungen von Cellulosederivaten hergestellt. Diese Lösungen werden mit polyolischen Spacern und Vernetzern mit einer oder mehreren Carbonyl-, und/oder Carboxylfunktionen versehen. Die so modifizierte Cellulosederivatlösung wird mit dem erfindungsgemäßen Gemisch kombiniert. Nach Trocknung des so hergestellten Verbundes entstehen je nach Herstellungsbedingungen flexible oder starre Folien. Die entstandenen Folien sind quellbar und können je nach Vernetzungsgrad hohe Anteile Wasser aufnehmen. Aufgrund der Wasseraufnahme ist insbesondere für kühlende Anwendungen im körpernahen Bereich eine zusätzliche Wasserverdampfung möglich. Damit ergeben sich erhebliche Steigerungen der summarischen Abkühlleistung.

Die beschriebenen Kombinationen des erfindungsgemäßen Gemisches mit Polyacrylaten, Polyurethanen, Silikonen oder Cellulosederivaten können zur Herstellung geometrisch definierter Strukturen auf flexiblen oder starren Grundträgermaterialien verwendet werden. Die definierten Strukturen können zum Beispiel sphärische, quadratische, rechteckige oder polygonale Formkörper sein. Die flüssige hochviskose Kombination aus dem erfindungsgemäßen Gemisch und den Polyacrylaten, Polyurethanen, Silikonen oder Cellulosederivatlösungen wird zum Beispiel durch Vergießen, Aufstreichen oder Aufsprühen auf Trägerstrukturen aufgebracht. Dabei können Schäume, Folien, Gewebe, Gewirke, Gestricke oder Vliesstoffe als Trägermaterialien zum Einsatz kommen. So können textile Träger aufweisend eine Beschichtung mit dem Gemisch und/oder textile Träger enthaltend ein erfindungsgemäßes Gemisch hergestellt werden.

Das erfindungsgemäße Gemisch kann in weiteren Verwendungen in Formkörper, beispielsweise in Schäume oder geschäumte Formkörper, eingebracht sein.

Die der Erfindung zu Grunde liegende Aufgabe wird ferner durch ein Verfahren zur Herstellung eines rieselfähigen Gemisches gelöst. Das Verfahren umfasst die Schritte des Extrudierens eines thermoplastischen Elastomers, eines funktionalisierten thermoplastischen Elastomers und mindestens eines Phasenwechselmaterials zu einer homogenen Masse, wobei der Anteil des Phasenwechselmaterials zwischen 60% und 90% der extrudierten Masse beträgt sowie des Granulierens der extrudierten Masse. Anschließend erfolgt die Zugabe eines zur Adsorption und/oder Absorption von Anteilen des Phasenwechselmaterials fähigen Bindemittels zu dem erzeugten Granulat. Bindemittel und Granulat werden miteinander gemischt, wobei das Bindemittel zwischen den Körnern des Granulats vorliegt. Beispielsweise erfolgt die Herstellung der Granulate unter Nutzung eines Extruders mit einer hohen Produktivität im Massedurchsatz pro Zeiteinheit. Ein Phasenwechselmaterial wird dabei unter Scherung mit einem thermoplastischen Elastomer (TPE), beispielsweise einem Styrol- Blockpolymer, und einem funktionalisierten TPE, beispielsweise auf der Grundlage von Styrol- Blockpolymeren, gemischt. Nach intensiver Mischung der Polymere mit dem PCM werden in einem Wasserbad, vorzugsweise mit einem Unterwasser-Granuliersystem, polymergebundene PCM-Granulate hergestellt. Nach Abkühlung und Trocknung der Granulate werden zusätzliche Bindemittel hinzugefügt und eine Mischung aus PCM-Granulat und Bindemittel erzeugt. Die Bindemittel sind wie oben beschrieben für die Bindung überschüssigen Phasenwechselmaterials geeignet.

Weist das eingesetzte PCM Schmelztemperaturen oberhalb der Raumtemperatur auf, kann eine zusätzliche Erwärmung des Gemisches bei intensiver Durchmischung erforderlich sein. Liegt der Schmelzpunkt des eingesetzten PCM dagegen unterhalb der Raumtemperatur, kann ein gezieltes Abkühlen und Durchmischen des PCM- Gemisches erfolgen. Dieses so entstandene Gemisch kann direkt oder in Kombination mit anderen polymeren Materialien zur Verarbeitung gebracht werden. Der Anteil der Phasenwechselmaterialien an den polymergebundenen PCM- Granulaten liegt vorteilhaft zwischen 60% und 90%. In Abhängigkeit von der Höhe der PCM-Anteile wird die hinzuzufügende Menge des Bindemittels festgelegt. Es ist eine solche Menge an Bindemittel oder Bindemittelmischungen zu verwenden, dass die Rieselfähigkeit des Gemisches erhalten bleibt. Die Bindemittel sollten feinkörnig und/oder pulverförmig und/oder faserförmig sein, vorzugsweise soll das Bindemittel im freien Volumen zwischen den Granulatkörnern und an der Oberfläche der Partikel angeordnet sein. Insbesondere für flexible weiche Strukturen in der Endanwendung sollten die Granulatkörner so klein wie möglich sein. Vorzugsweise haben diese einen durchschnittlichen Durchmesser zwischen 0,5 mm und 3 mm, vorzugsweise zwischen 0,6 mm und 1,5 mm.

In weiteren Ausgestaltungen des erfindungsgemäßen Verfahrens kann der Anteil des Phasenwechselmaterials mehr als 70%, insbesondere mehr als 80% bis 90% der extrudierten Masse betragen, wenn ein silikatisches Bindemittel verwendet wird.

Die Vorteile der Erfindung liegen in der Bereitstellung eines flexiblen Latentwärmespeichersystems, das eine hohe Wärmespeicherkapazität pro Volumeneinheit aufweist. Es ist zudem kostengünstig zu fertigen und auslaufsicher in der Anwendung. In der Handhabung ist das erfindungsgemäße Gemisch mechanisch stabil und kann leicht in verschiedene Geometrien und Verbunde eingebracht werden. Es ist eine direkte Weiterverarbeitung der Mischung bestehend aus den Granulaten und den zusätzlichen Bindemitteln für PCM- Materialien möglich.

Nachfolgend werden Ausführungsbeispiele der Erfindung und eine Abbildung angegeben.

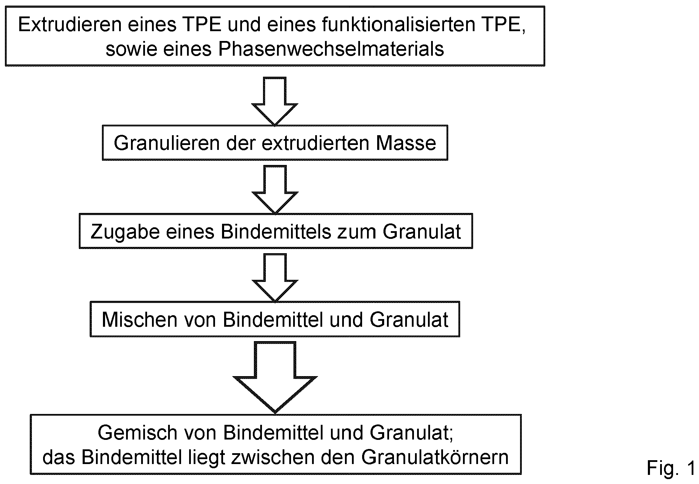

Das erfindungsgemäße Verfahren ist schematisch in Fig. 1 zusammengefasst. In einem ersten Schritt werden ein TPE und ein funktionalisiertes TPE sowie ein PCM gemeinsam extrudiert, sodass diese Komponenten homogen gemischt sind und das PCM in die durch die TPE's gebildete Polymermatrix eingebunden ist. Die durch den Extrusionsvorgang erhaltene Masse wird granuliert. Zu dem gewonnenen Granulat wird insbesondere nach dessen Abkühlung und Trocknung ein Bindemittel der oben beschriebenen Art zugegeben und mit dem Granulat gemischt. Dabei wird das Bindemittel nicht in das Granulat inkorporiert. Im Ergebnis wird ein Gemisch aus dem Granulat und dem Bindemittel erhalten, bei dem das Bindemittel zwischen den Körnern des Granulats vorliegt.

### Beispiel 1

### Herstellung eines erfindungsgemäßen Gemisches

Unter Nutzung eines Doppelschneckenextruders vom Typ ZSE 40 (Firma Leistritz) mit einem Verhältnis von Schneckenlänge zu Schneckendurchmesser von 52:1 werden im ersten Schritt das TPE vom Typ SEEPS (Septon 4055 mit einem Styrolanteil von 30%) mit einem Anteil von 15% und das funktionalisierte TPE vom Typ SEEPS-OH (Septon HG 252 mit einem Styroanteil von 28%) mit einem Anteil von 5% in den ersten Zonen aufgeschmolzen. Das geschmolzene Paraffinderivat von Sasol Parafol 16-97 wird über eine Dosiereinrichtung mit einem Masseanteil von 80% als PCM der Schmelze zugemischt. Die mittlere Verweilzeit liegt bei 4 Minuten und der Durchsatz bei 25 kg/h. Das geschmolzene PCM- Compound wird über einen Unterwasser-Granulator zu Granulatkörnern verarbeitet und getrocknet. Das Granulat wird nach der Trocknung mit biogener Diatomeenerde mit einem Masseanteil von 30% bezogen auf die erzeugte Granulatmasse versehen. Das Material kann direkt als Schüttung verwendet werden.

### Beispiel 2

### Herstellung eines erfindungsgemäßen Gemisches mit Cellulosepulver

Die Herstellung des PCM- Compounds erfolgt wie im Beispiel 1. Nach Trocknung der Granulate werden 15% Masseanteil einer gemahlenen Cellulose mit dem Markennamen Jelucel HM 300 zugemischt. Das so hergestellte Gemisch wird als Füllmaterial in Vliesstoffe eingebracht und dient der Herstellung kühlender Textilien.

### Beispiel 3

### Verwendung eines erfindungsgemäßen Gemisches mit funktionalisierten Bindemitteln für Silikonanwendungen

Unter Nutzung eines Doppelschneckenextruders vom Typ ZSE 40 (Firma Leistritz) mit einem Verhältnis von Schneckenlänge zu Schneckendurchmesser von 52:1 wird im ersten Schritt das TPE vom Typ SEEPS (Septon 4055 mit einem Styrolanteil von 30% Masseanteil) mit einem Masseanteil von 19% und das funktionalisierte TPE vom Typ SEEPS-OH (Septon HG 252 mit einem Styroanteil von 28%) mit einem Masseanteil von 5% in den ersten Zonen aufgeschmolzen. Das geschmolzene Paraffinderivat von Sasol Parafol 20Z wird als PCM über eine Dosiereinrichtung mit einem Masseanteil von 76% der Schmelze zugemischt. Die mittlere Verweilzeit liegt bei 3 Minuten und der Durchsatz beträgt 30 kg/h. Das geschmolzene PCM- Compound wird über einen Unterwasser-Granulator zu Granulatkörnern verarbeitet und getrocknet. Das Granulat wurde nach der Trocknung mit einem funktionalisierten Mineralstoff der Firma Hoffmann Mineral Aktisil Q mit einem Anteil von 20% bezogen auf die erzeugte Granulatmasse versehen. Das so erhaltene Gemisch wird mit flüssigem Silikon und Vernetzter vermischt und ergibt nach der Aushärtung flexible PCM-haltige Silikonfolien.

### Beispiel 4

### Verwendung eines erfindungsgemäßen Gemisches in Kammerstrukturen von Folien, Vliesstoffen und Geweben

Unter Verwendung von Polyurethanfolie einer Dicke von 100 µm von Gerlinger Industries werden im Schweißverfahren Hohlkammern mit einem Durchmesser von 3 cm mit den Abmessungen 30 cm x 60 cm erzeugt und mit 125 g eines erfindungsgemäßen Gemischs je Kammer befüllt. Nach dem Verschweißen der Füllungsseite der Hohlkammerfolie erhält man in den Kammern eine Menge an Luft und erfindungsgemäßen Gemisch. Das so gefertigte Foliengebilde weist im Temperaturbereich von 5 - 20°C eine summarische Wärmespeicherkapazität von 568 Wh/m² auf. Bei der Herstellung von Mustern des Ausführungsbeispiels wurden unter Verwendung von Vliesstoffen oder Geweben einseitig mit Kleberschicht versehene Flächen miteinander verschweißt oder teilverklebt. Es entstehen Kammern in gewünschten geometrischen Formen. Bei der Verwendung von Ultraschall-Verschweißung kann auf eine zusätzliche Kleberschicht verzichtet werden.

### Beispiel 5

### Verwendung eines erfindungsgemäßen Gemisches in Noppenstrukturen

Ein erfindungsgemäßes Gemisch nach Beispiel 1 wird für die Kombination mit einer wässrigen Dispersion aus Polyacrylaten verwendet. Zum Einsatz kommt eine OHfunktionalisierte Acrylat-Dispersion (Joncryl MBFlex) mit einem Feststoffmasseanteil von 42% und einer Viskosität von 1000 mPas (25°C). Es werden 72,2 g MBFlex mit 3,6 g Verdickungsmittel vom Typ Tafigel Pur 61 gemischt. Anschließend werden 130 g des erfindungsgemäßen Gemisches hinzugefügt. Die so erhaltene Mischung wird in eine Metallform gegossen. Die Metallform hatte in der untersten Lage einen Vliesstoff enthalten und ist durch eine Füllform überdeckt, die über 6400 quadratische Teilflächen pro m² verfügt. Die hochviskose Mischung aus Polyacrylatdispersion, Verdicker und erfindungsgemäßem Gemisch bildet nach der Entfernung des Wasseranteiles eine Noppenstruktur aus.

## Patentansprüche

1. Rieselfähiges Gemisch, enthaltend:
- Granulat aus einem thermoplastischen Elastomer und einem funktionalisierten thermoplastischen Elastomer und mit mindestens einem an die thermoplastischen Elastomere gebundenen Phasenwechselmaterial,
- sowie wenigstens ein zur Adsorption und/oder Absorption von Anteilen des Phasenwechselmaterials fähiges Bindemittel;
**dadurch gekennzeichnet, dass**
- das Bindemittel in Zwischenräumen zwischen den Körnern des Granulats vorliegt; und entweder
- i) der Gewichtsanteil des Phasenwechselmaterials an dem Granulat zwischen 60% und 90% beträgt und das Bindemittel ein nicht-silikatisches Bindemittel ist; oder
- ii) der Gewichtsanteil des Phasenwechselmaterials an dem Granulat mehr als 70% und bis zu 90% beträgt.

2. Gemisch nach Anspruch 1, **dadurch gekennzeichnet, dass** das thermoplastische Elastomer ein Styrol-Blockpolymer und das funktionalisierte thermoplastische Elastomer ein funktionalisiertes Styrol-Blockpolymer ist.

3. Gemisch nach Anspruch 1 oder 2, **dadurch gekennzeichnet, dass** das funktionalisierte thermoplastische Elastomer ein mit zusätzlichen Hydroxy-Gruppen (-OH) versehenes thermoplastisches Elastomer ist.

4. Gemisch nach einem der vorhergehenden Ansprüche, **dadurch gekennzeichnet, dass** ein nicht-silikatisches Bindemittel ausgewählt ist aus einer Gruppe umfassend:
- polymere Pulver und/oder polymere Fasern, insbesondere aus Polyurethan, Polyacrylaten, quervernetzten Polyalken-Terpolymeren, Polypropylen, thermoplastischen Elastomeren und Gummi sowie deren Mischungen;
- Polysacchariden und deren Derivaten, Lignocellulose;
- natürliche Fasern, Kräuter , Gräser, Algen, hydrophobe biogene Sedimente; Pulver aus gemahlenen Pflanzenteilen; jeweils als Pulver und/oder als Kurzfasern.

5. Gemisch nach einem der Ansprüche 1 bis 3, **dadurch gekennzeichnet, dass** ein silikatisches Bindemittel ausgewählt ist aus einer Gruppe umfassend:
- Silikate, insbesondere Calciumsilikat, Magnesiumsilikat, Magnesiumaluminiumsilikat oder deren Hydratformen; sowie Schichtsilikate (Phyllosilikate), insbesondere Palygorskit, und Vermiculit;
- hydrophobe silikatische biogene Sedimente, insbesondere Kieselgur sowie Mischungen enthaltend Kieselgur und Acrylsäuresalz.

6. Gemisch nach einem der vorhergehenden Ansprüche, **dadurch gekennzeichnet, dass** das Bindemittel mit wenigstens einer der Gruppen Alkyl-, Vinyl-, Epoxy-, Amino-, Methacryl-, Mercapto- und Tetrasulfonsilanen funktionalisiert sind.

7. Gemisch nach einem der vorhergehenden Ansprüche, **dadurch gekennzeichnet, dass** das Granulat Korngrößen von 0,5 mm bis 3 mm, vorzugsweise von 0,6 mm bis 1,5 mm, aufweist.

8. Verwendung eines Gemischs nach einem der vorhergehenden Ansprüche in Form einer Schüttung.

9. Textiler Träger aufweisend eine Beschichtung mit einem Gemisch nach einem der Ansprüche 1 bis 7.

10. Textiler Träger enthaltend ein Gemisch nach einem der Ansprüche 1 bis 7.

11. Behältnis mit einer oder mehreren Kammern enthaltend ein Gemisch nach einem der Ansprüche 1 bis 7.

12. Flüssigsilikon enthaltend ein Gemisch nach Anspruch 6.

13. Folien enthaltend ein Gemisch nach einem der Ansprüche 1 bis 7.

14. Formkörper enthaltend ein Gemisch nach einem der Ansprüche 1 bis 7.

15. Verfahren zur Herstellung eines rieselfähigen Gemisches, umfassend die Schritte
- Extrudieren eines thermoplastischen Elastomers, eines funktionalisierten thermoplastischen Elastomers und mindestens eines Phasenwechselmaterials zu einer homogenen Masse, wobei der Anteil des Phasenwechselmaterials zwischen 60% und 90% der extrudierten Masse beträgt,
- Granulieren der extrudierten Masse;
- Zugabe eines zur Adsorption und/oder Absorption von Anteilen des Phasenwechselmaterials fähigen Bindemittels und Mischen des Bindemittels und des Granulats, wobei das Bindemittel zwischen den Körnern des Granulats vorliegt.

## Claims

1. A free-flowing mixture containing:
- a granulate material made of a thermoplastic elastomer and a functionalized thermoplastic elastomer, and comprising at least one phase change material bound to the thermoplastic elastomer,
- and at least one binding agent capable of adsorbing and/or absorbing portions of the phase change material;
**characterized in that**
- the binding agent is present in intermediate spaces between the grains of the granulate material; and either
- i) the proportion by weight of the phase change material in the granulate material is between 60% and 90% and the binding agent is a non-silicate binding agent; or
- ii) the proportion by weight of the phase change material in the granulate material is more than 70% and up to 90%.

2. The mixture according to claim 1, **characterized in that** the thermoplastic elastomer is a styrene block polymer, and the functionalized thermoplastic elastomer is a functionalized styrene block polymer.

3. The mixture according to either claim 1 or claim 2, **characterized in that** the functionalized thermoplastic elastomer is a thermoplastic elastomer provided with additional hydroxy groups (-OH).

4. The mixture according to any of the preceding claims,
**characterized in that** a non-silicate binding agent is selected from a group comprising:
- polymeric powders and/or polymeric fibers, in particular of polyurethane, polyacrylates, cross-linked polyalkene terpolymers, polypropylene, thermoplastic elastomers and rubber as well as mixtures thereof;
- polysaccharides and derivatives thereof, lignocellulose;
- natural fibers, herbs, grasses, algae, hydrophobic biogenic sediments; powder from ground plant parts;
each as powder and/or as short fibers.

5. The mixture according to any of claims 1 to 3, **characterized in that** a silicate binding agent is selected from a group comprising:
- silicates, in particular calcium silicate, magnesium silicate, magnesium aluminum silicate or hydrate forms thereof; and layered silicates (phyllosilicates), in particular palygorskite, and vermiculite;
- hydrophobic silicate biogenic sediments, in particular diatomite, mixtures containing diatomite and acrylic acid salt.

6. The mixture according to any of the preceding claims,
**characterized in that** the binding agent is functionalized by at least one of the following groups: alkyl, vinyl, epoxy, amino, methacryl, mercapto, and tetrasulphone silanes.

7. The mixture according to any of the preceding claims,
**characterized in that** the granulate material has grain sizes of 0.5 mm to 3 mm, preferably of 0.6 mm to 1.5 mm.

8. A use of a mixture according to any of the preceding claims in the form of a fill.

9. A textile carrier comprising a coating with a mixture according to any of claims 1 to 7.

10. A textile carrier containing a mixture according to any of claims 1 to 7.

11. A container having one or more chambers containing a mixture according to any of claims 1 to 7.

12. A liquid silicone containing a mixture according to claim 6.

13. Films containing a mixture according to any of claims 1 to 7.

14. A molded body containing a mixture according to any of claims 1 to 7.

15. A method for producing a free-flowing mixture, comprising the steps of
- extruding a thermoplastic elastomer, a functionalized thermoplastic elastomer, and at least one phase change material into a homogeneous mass, wherein the proportion of the phase change material is between 60% and 90% of the extruded mass,
- granulating the extruded mass;
- adding a binding agent capable of adsorbing and/or absorbing parts of the phase change material and mixing the binding agent and the granulate material, the binding agent being present between the grains of the granulate material.

## Revendications

1. Mélange à écoulement libre contenant :
- un granulat d'un élastomère thermoplastique et d'un élastomère thermoplastique fonctionnalisé et comportant au moins un matériau à changement de phase lié aux élastomères thermoplastiques,
- ainsi qu'au moins un liant apte à adsorber et/ou à absorber des fractions du matériau à changement de phase ;
**caractérisé en ce que**
- le liant est présent dans les interstices entre les grains du granulat ; et soit
- i) la proportion en poids du matériau à changement de phase dans le granulat est située entre 60 % et 90 % et le liant est un liant non silicaté ; ou
- ii) la proportion en poids du matériau à changement de phase dans le granulat est supérieure à 70 % et jusqu'à 90 %.

2. Mélange selon la revendication 1, **caractérisé en ce que** l'élastomère thermoplastique est un polymère séquencé de styrène et l'élastomère thermoplastique fonctionnalisé est un polymère séquencé de styrène fonctionnalisé.

3. Mélange selon la revendication 1 ou 2, **caractérisé en ce que** l'élastomère thermoplastique fonctionnalisé est un élastomère thermoplastique pourvu de groupes hydroxy supplémentaires (-OH).

4. Mélange selon l'une des revendications précédentes, **caractérisé en ce qu'**un liant non silicaté est choisi dans un groupe comprenant :
- les poudres et/ou les fibres polymères, en particulier en polyuréthane, polyacrylates, terpolymères de polyalcène réticulés, polypropylène, élastomères thermoplastiques et caoutchouc, ainsi que leurs mélanges ;
- les polysaccharides et leurs dérivés, la lignocellulose ;
- les fibres naturelles, les herbes, les graminées, les algues, les sédiments biogènes hydrophobes ; les poudres de parties de plantes broyées ;
respectivement sous forme de poudre et/ou de fibres courtes.

5. Mélange selon l'une des revendications 1 à 3, **caractérisé en ce qu'**un liant silicaté est choisi dans un groupe comprenant :
- les silicates, en particulier le silicate de calcium, le silicate de magnésium, le silicate de magnésium et d'aluminium ou leurs formes hydratées ; ainsi que les silicates stratifiés (phyllosilicates), en particulier la palygorskite et la vermiculite ;
- les sédiments biogènes silicatés hydrophobes, en particulier le kieselguhr ainsi que les mélanges contenant du kieselguhr et un sel d'acide acrylique.

6. Mélange selon l'une des revendications précédentes, **caractérisé en ce que** le liant est fonctionnalisé par au moins un des groupes alkylsilanes, vinylsilanes, époxysilanes, aminosilanes, méthacrylsilanes, mercaptosilanes et tétrasulfonesilanes.

7. Mélange selon l'une des revendications précédentes, **caractérisé en ce que** le granulat présente des granulométries de 0,5 mm à 3 mm, de préférence de 0,6 mm à 1,5 mm.

8. Utilisation d'un mélange selon l'une des revendications précédentes sous la forme d'un remblai.

9. Support textile présentant un revêtement comportant un mélange selon l'une des revendications 1 à 7.

10. Support textile contenant un mélange selon l'une des revendications 1 à 7.

11. Récipient comportant un ou plusieurs compartiments contenant un mélange selon l'une des revendications 1 à 7.

12. Silicone liquide contenant un mélange selon la revendication 6.

13. Films contenant un mélange selon l'une des revendications 1 à 7.

14. Corps moulé contenant un mélange selon l'une des revendications 1 à 7.

15. Procédé pour la préparation d'un mélange à écoulement libre, comprenant les étapes suivantes
- extrusion d'un élastomère thermoplastique, d'un élastomère thermoplastique fonctionnalisé et d'au moins un matériau à changement de phase en une masse homogène, la proportion du matériau à changement de phase étant située entre 60 % et 90 % de la masse extrudée,
- granulation de la masse extrudée ;
- ajout d'un liant apte à adsorber et/ou à absorber des fractions du matériau à changement de phase et mélange du liant et du granulat, le liant étant présent entre les grains du granulat.
